# EUROPÄISCHE PATENTSCHRIFT

(11) **EP 0 632 636 B1**
(45) Veröffentlichungstag und Bekanntmachung des Hinweises auf die Patenterteilung: **20.10.1999**
(21) Anmeldenummer: 94103394.6
(22) Anmeldetag: 07.03.1994
(51) Int. Cl.: H04M 11/06

(54) **Vorrichtung zur Kopplung**
Device for connection
Dispositif pour connecteur

(30) Priorität: 21.05.1993 DE 4316989
(43) Veröffentlichungstag der Anmeldung: 04.01.1995
(73) Patentinhaber: HAGENUK GMBH, D-24118 Kiel (DE)
(72) Erfinder: Froese, Andreas, Dr., D-22455 Hamburg (DE); Petz, Gerhard, Dipl.-Ing., D-24146 Kiel (DE)
(74) Vertreter: Hansmann, Dierk, Dipl.-Ing.

(56) Entgegenhaltungen:
- US-A- 5 046 187
- PATENT ABSTRACTS OF JAPAN, unexamined applications, E Field, Band 16, Nr. 379, 13. August 1992 THE PATENT OFFICE JAPANESE GOVERNMENT Seite 107 E 1247; & JP-A-04-120 955 (SHARP CORP.)
- PATENT ABSTRACTS OF JAPAN, unexamined applications, E Field, Band 12, Nr. 211, 16. Juni 1988 THE PATENT OFFICE JAPANESE GOVERNMENT Seite 41 E 622; & JP-A-63-7 069 (NEC CORP.)

## Beschreibung

Die Erfindung betrifft eine Vorrichtung zur Kopplung einer Datenendeinrichtung an ein Telekommunikationsnetz, die nunmehr eine der Datenendeinrichtung zugewandt angeordnete Benutzerschnittstelle und eine dem Telekommunikationsnetz zugewandt angeordnete Telekommunikationsschnittstelle aufweist.

Derartige Vorrichtungen werden beispielsweise verwendet, um einen Personalcomputer über das öffentliche Telefonnetz an einen anderen Computer anzuschließen oder um entsprechende Datenbankabfragen vorzunehmen. Hierzu wird die Datenendeinrichtung mit einem Modem verbunden, das seinerseits an das Telekommunikationsnetz angeschlossen ist. Bei dem Modem handelt es sich um eine spezielle elektronische Schaltung, die nur für diesen Verbindungszweck geeignet und verwendbar ist. Für eine Verwendung eines derartigen Modems muß eine ortsfest installierte Anschlußeinrichtung vorgesehen sein, beispielsweise eine Telefonsteckdose, in die das Modem mit seinen Anschlußkontakten eingesteckt wird.

Dieses Erfordernis der ortsfesten Installation hat zum einen einen zusätzlichen Verkabelungsaufwand zur Folge, zum anderen ist es nicht in einfacher Weise möglich, Datenendeinrichtungen, die an wechselnden Aufstellungsorten genutzt werden, mit geringem Arbeitsaufwand an ein Telekommunikationsnetz anzuschließen.

Eine Vorrichtung zur Kopplung einer Datenendeinrichtung an ein Telekommunikationsnetz über ein Schnurloses Telefon ist aus dem Dokument US-A-5 046 187 bekannt.

Aufgabe der vorliegenden Erfindung ist es daher, eine Vorrichtung der einleitend genannten Art derart zu konstruieren, daß eine zusätzliche Leitungsverlegung vermieden wird und daß eine Verwendung an unterschiedlichen Aufstellungsorten mit geringem Aufwand möglich ist.

Diese Aufgabe wird erfindungsgemäß dadurch gelöst, daß die Telekommunikationsschnittstelle als Mobilteil eines schnurlosen Telefones ausgebildet ist, das Mobilteil über eine Mobilteilschnittstelle an einen Umsetzer zur Datentransformation angeschlossen ist und daß der Umsetzer zur Datenkonvertierung an die Benutzerschnittstelle angeschlossen ist.

Durch die Ausbildung der Telekommunikationsschnittstelle als Mobilteil ist es möglich, auf separate Anschlußleitungen zu verzichten. Das Telekommunikationsnetz kann vielmehr drahtlos über die Funkstrecke zwischen dem Mobilteil und einer zugeordneten Basisstation angeschlossen werden.

Zur Ermöglichung einer Benutzung standardmäßig vorhandener Schnittstellen von Datenendeinrichtungen wird vorgeschlagen, daß die Benutzerschnittstelle als eine serielle Schnittstelle ausgebildet ist.

Eine andere zweckmäßige Ausführungsform wird dadurch bereitgestellt, daß die Benutzerschnittstelle als eine Parallelschnittstelle ausgebildet ist. Zur Ermöglichung einer universellen Verwendbarkeit der Vorrichtung ist es auch möglich, daß zur Ausbildung der Benutzerschnittstellen mindestens eine serielle Schnittstelle und mindestens eine Parallelschnittstelle vorgesehen sind, die mit einer sie wahlweise aktivierenden Steuerung verbunden sind.

Eine Verarbeitung von Daten unter Berücksichtigung häufig angewendeter Modulationsverfahren wird dadurch unterstützt, daß der Umsetzer als Konverter für kodierte Daten vorgesehen ist, die einerseits nach einem PCM-Verfahren und andererseits nach einem ADPCM-Verfahren moduliert sind.

Eine typische Anwendung besteht darin, daß die Datenendeinrichtung als ein Personalcomputer ausgebildet ist.

Zur Ermöglichung einer Verwendung eines Mobilteiles sowohl als Einrichtung zur Datenübertragung als auch als Einrichtung zur Durchführung von Gesprächen wird vorgeschlagen, daß das Mobilteil trennbar mit der Mobilteilschnittstelle verbunden ist.

Besonders hohe Datenübertragungsraten können dadurch realisiert werden, daß eine Benutzerschnittstelle als eine ISDN-Schnittstelle ausgebildet ist.

Eine einfache und übersichtliche Betriebsweise wird dadurch realisiert, daß die Datenendeinrichtung als Terminal an eine der Schnittstellen anschließbar ist.

Zur Abstimmung der Betriebsweise der einzelnen verwendeten Komponenten wird vorgeschlagen, daß sowohl die Schnittstellen als auch der Umsetzer von einer Steuerung koordiniert sind.

In der Zeichnung sind Ausführungsbeispiele der Erfindung schematisch dargestellt. Es zeigen:

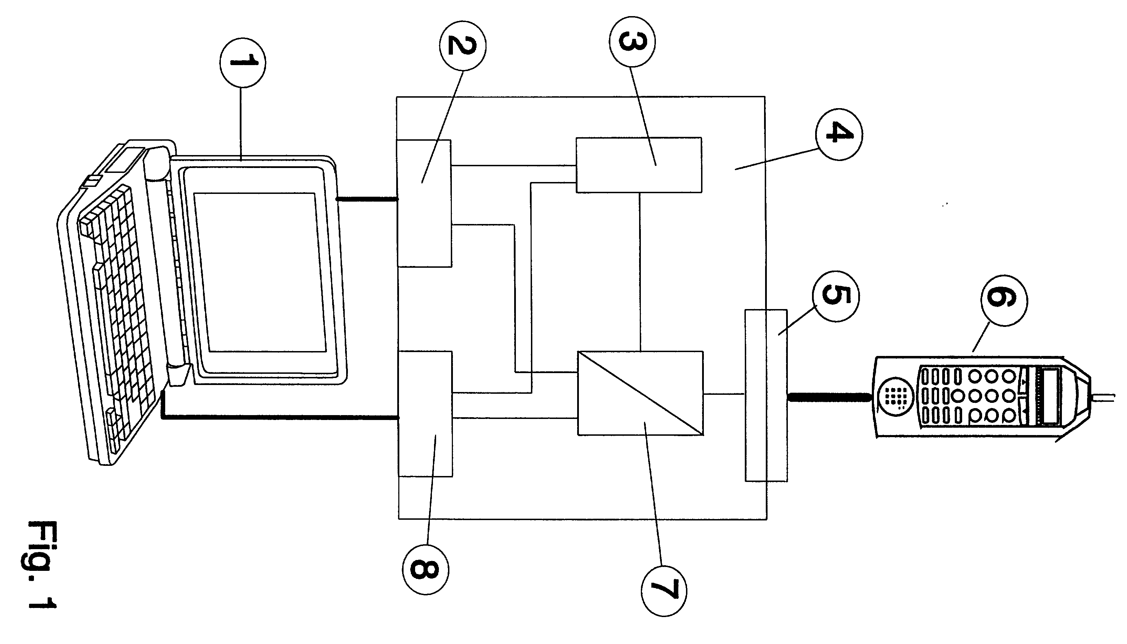

- Fig. 1: ein Blockschaltbild zur Darstellung der wesentlichen Komponenten der Vorrichtung und

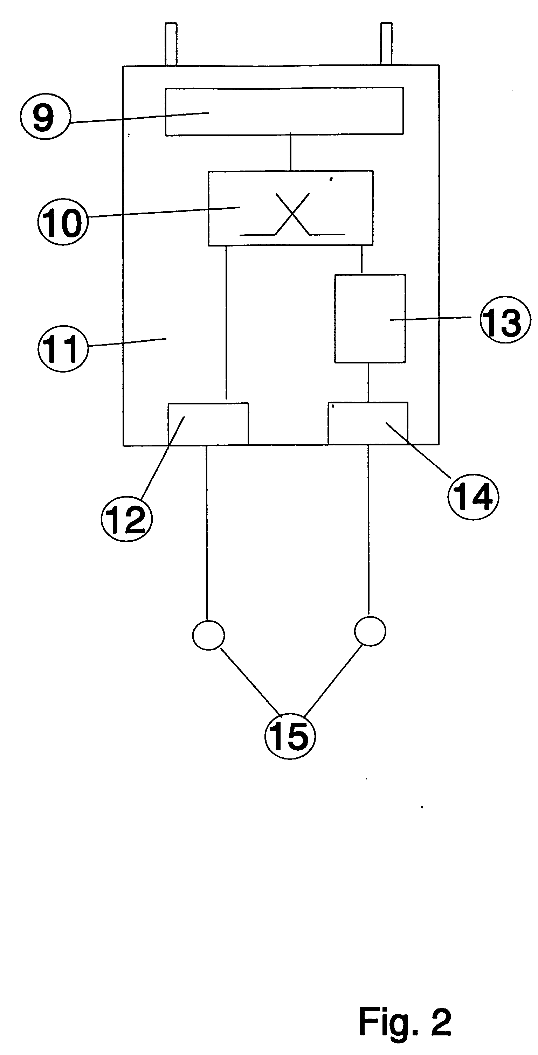

- Fig. 2: ein Blockschaltbild zur Veranschaulichung der Komponenten im Bereich der Empfangseinrichtung für das Mobilteil.

Die Vorrichtung besteht im wesentlichen aus einem Adapter 4, der einerseits an eine Datenendeinrichtung 1 und andererseits an ein Mobilteil 6 zur schnurlosen Telekommunikation angeschlossen ist. Der Adapter 4 weist eine Parallelschnittstelle 2 sowie eine serielle Schnittstelle 8 auf. Über die Schnittstellen 2, 8, die wahlweise aktivierbar sind, erfolgt der Anschluß der Datenendeinrichtung 1, beispielsweise eines Personalcomputers, an den Adapter 4. Eine der Schnittstellen 2, 8 kann als eine Schnittstelle zum Anschluß an Hochgeschwindigkeitsdatenübertragungssysteme, beispielsweise ISDN, ausgebildet sein. Die Schnittstellen 2, 8 simuliert hierbei einen Netzwerkabschluß des ISDN, so daß die angeschlossene Datenendeinrichtung wie ein Terminal innerhalb des ISDN betrieben wird.

Die serielle Schnittstelle 8 kann beispielsweise als V24-Schnittstelle ausgebildet sein. Mit Hilfe der seriellen Schnittstelle 8 kann ein Anschluß eines übergeordneten Rechners nachgebildet werden.

Die Schnittstellen 2, 8 sind mit einem Umsetzer 7 verbunden, der eine erforderliche Datenkonvertierung durchführt. Bei entsprechend dem PCM-Verfahren modullierten Daten kann beispielsweise eine Konvertierung in ADPCM erfolgen. Sowohl der Umsetzer 7 als auch die Schnittstellen 2, 8 werden über eine Steuerung 3 koordiniert.

Zur Verbindung des Mobilteiles 6 mit dem Umsetzer 7 ist eine Mobilteilschnittstelle 5 vorgesehen, mit der das Mobilteil 6 vorzugsweise lösbar über Steckverbindungen gekoppelt ist. Dies ermöglicht es, das Mobilteil 6 vom Adapter 4 zu trennen und einer üblichen Verwendung als mobiles Telefon zuzuführen.

Im Bereich einer Telekommunikationsanlage 11, die drahtlos über entsprechende Antennen mit dem Mobilteil 6 kommuniziert, sind ein Hochfrequenzempfangsteil 9, ein Koppel feld 10 sowie Anschlußeinrichtungen an ein Kommunikationsnetz 15 angeordnet. Die Anschlußeinrichtungen können beispielsweise als Netzanschluß 12 oder als Kombination eines Modems 13 mit einem Telefonanschluß 14 ausgebildet sein. Über den Telefonanschluß 14 kann ein Anschluß an ein als Telefonnetz ausgebildetes Kommunikationsnetz 15 erfolgen, der Netzanschluß 12 dient beispielsweise einem Anschluß an das ISDN.

Zur Ermöglichung einer kompakten Ausführung ist es beispielsweise bei einem Anschluß eines Personalcomputers möglich, den Adapter 4 als Einschubkarte für den Personalcomputer auszubilden. Hierdurch werden Zusatzgeräte vermieden und es ist lediglich erforderlich, das Mobilteil 6 mit den entsprechenden Anschlußelementen des Einschubes zu verbinden.

Zur Durchführung einer Datenübertragung vom Kommunikationsnetz 15 in Richtung auf die Datenendeinrichtung 1 wird zunächst eine Verbindung zwischen dem Kommunikationsnetz 15 und der Telekommunikationsanlage 11 aufgebaut und anschließend die drahtlose Verbindung zwischen dem Mobilteil und der Telekommunikationsanlage 11 hergestellt. Anschließend baut das Mobilteil 6 die Verbindung zum Adapter 4 und danach der Adapter 4 die Verbindung zur Datenendeinrichtung 1 auf. Nachdem alle Verbindungen aktiviert wurden, kann die Datenübertragung durchgeführt werden. Für eine Datenübertragung in umgekehrter Richtung werden diese Abläufe sinngemäß ebenfalls in umgekehrter Richtung durchlaufen. Vor einer Datenübertragung muß hier allerdings ermittelt werden, ob die anzusprechende Gegenstelle frei ist.

## Patentansprüche

1. Vorrichtung zur Kopplung einer Datenendeinrichtung an ein Telekommunikationsnetz, die eine der Datenendeinrichtung zugewandt angeordnete Benutzerschnittstelle und eine dem Telekommunikationsnetz zugewandt angeordnete Telekommunikationsschnittstelle aufweist, dadurch gekennzeichnet, daß die Telekommunikationsschnittstelle als Mobilteil (6) eines schnurlosen Telefones ausgebildet ist, das Mobilteil (6) über eine Mobilteilschnittstelle (5) an einen Umsetzer (7) zur Datentransformation angeschlossen ist und daß der Umsetzer (7) zur Datenkonvertierung an die Benutzerschnittstelle angeschlossen ist.

2. Vorrichtung nach Anspruch 1, dadurch gekennzeichnet, daß die Benutzerschnittstelle als eine serielle Schnittstelle (8) ausgebildet ist.

3. Vorrichtung nach Anspruch 1, dadurch gekennzeichnet, daß die Benutzerschnittstelle als eine Parallelschnittstelle (2) ausgebildet ist.

4. Vorrichtung nach einem der Ansprüche 1 bis 3, dadurch gekennzeichnet, daß zur Ausbildung der Benutzerschnittstellen mindestens eine serielle Schnittstelle (8) und mindestens eine Parallelschnittstelle (2) vorgesehen sind, die mit einer sie wahlweise aktivierenden Steuerung verbunden sind.

5. Vorrichtung nach einem der Ansprüche 1 bis 4, dadurch gekennzeichnet, daß der Umsetzer (7) als Konverter für kodierte Daten vorgesehen ist, die einerseits nach einem PCM-Verfahren und andererseits nach einem ADPCM-Verfahren moduliert sind.

6. Vorrichtung nach einem der Ansprüche 1 bis 5, dadurch gekennzeichnet, daß die Datenendeinrichtung (1) als ein Personalcomputer ausgebildet ist.

7. Vorrichtung nach einem der Ansprüche 1 bis 6, dadurch gekennzeichnet, daß das Mobilteil (6) trennbar mit der Mobilteilschnittstelle (5) verbunden ist.

8. Vorrichtung nach einem der Ansprüche 1 bis 7, dadurch gekennzeichnet, daß eine Benutzerschnittstelle (2, 8) als eine ISDN-Schnittstelle ausgebildet ist.

9. Vorrichtung nach einem der Ansprüche 1 bis 8, dadurch gekennzeichnet, daß die Datenendeinrichtung (1) als Terminal an eine der Schnittstellen (2, 8) anschließbar ist.

10. Vorrichtung nach einem der Ansprüche 1 bis 9, dadurch gekennzeichnet, daß sowohl die Schnittstellen (2, 8) als auch der Umsetzer (7) von einer Steuerung (3) koordiniert sind.

## Claims

1. Device for connecting data terminal equipment to a telecommunications system, comprising a user interface arranged directed towards the data terminal equipment and a telecommunications interface arranged directed towards the telecommunications system, characterized in that the telecommunications interface is designed as the mobile part (6) of a cordless telephone, the mobile part (6) is connected by a mobile part interface (5) to a converter (7) for data translation and that the converter (7) is connected for data conversion to the user interface.

2. Device according to claim 1, characterized in that the user interface is designed as a serial interface (8).

3. Device according to claim 1, characterized in that the user interface is designed as a parallel interface (2).

4. Device according to one of claims 1 to 3, characterized in that, for forming the user interfaces, at least one serial interface (8) and at least one parallel interface (2) are provided, which are connected to a controller which optionally activates them.

5. Device according to one of claims 1 to 4, characterized in that the converter (7) is provided as a converter for coded data which are modulated, on the one hand, using a PCM technique and, on the other hand, using an ADPCM technique.

6. Device according to one of claims 1 to 5, characterized in that the data terminal equipment (1) is a personal computer.

7. Device according to one of claims 1 to 6, characterized in that the mobile part (6) is disconnectably connected to the mobile part interface (5).

8. Device according to one of claims 1 to 7, characterized in that a user interface (2, 8) is designed as an ISDN interface.

9. Device according to one of claims 1 to 8, characterized in that the data terminal equipment (1) is connectable as a terminal to one of the interfaces (2, 8).

10. Device according to one of claims 1 to 9, characterized in that both the interfaces (2, 8) and the converter (7) are coordinated by a controller (3).

## Revendications

1. Dispositif de couplage d'un ensemble terminal de données à un réseau de télécommunication, qui possède une interface utilisateur du côté du terminal de données, et une interface de télécommunication du côté du réseau de télécommunication, caractérisé en ce que l'interface de télécommunication est concue comme partie mobile (6) d'un téléphone sans fil, et en ce que la.partie mobile (6) est raccordée à travers une interface de la partie mobile (5) à un convertisseur (7) et que le convertisseur de données (7) est raccordé à l'interface utilisateur.

2. Dispositif selon la revendication 1, caractérisé en ce que l'interface utilisateur est conçue comme port série (8).

3. Dispositif selon la revendication 1, caractérisé par la conception de l'interface utilisateur est conçue comme port parallèle (2).

4. Dispositif selon n'importe laquelle des revendications 1 à 3, caractérisé par la mise en place d'au moins un port série (8) et au moins un port parallèle (2), raccordés à un sélecteur d'activation de l'un ou de l'autre.

5. Dispositif selon n'importe laquelle des revendications 1 à 4, caractérisé par le fait que le convertisseur (7) est conçu pour des données codées modulées, soit selon le procédé PCM, soit selon le procédé ADPCM.

6. Dispositif selon n'importe laquelle des revendications 1 à 5, caractérisé par l'utilisation d'un ordinateur personnel comme terminal de données.

7. Dispositif selon n'importe laquelle des revendications 1 à 6, caractérisé par la possibilité de déconnecter l'interface de la partie mobile (5) de la partie mobile (6).

8. Dispositif selon n'importe laquelle des revendications 1 à 7, caractérisé par le fait que l'interface utilisateur (2, 8) est réalisée comme interface RNIS (ISDN).

9. Dispositif selon n'importe laquelle des revendications 1 à 8, caractérisé par le fait que le terminal de données (1) peut être raccordé à une des interfaces 2, 8.

10. Dispositif selon n'importe laquelle des revendications 1 à 9, caractérisé par la coordination des interfaces (2, 8) et du convertisseur (7) à l'aide d'un système de pilotage (3).
